# EUROPÄISCHE PATENTANMELDUNG

(11) **EP 0 831 603 A2**
(43) Veröffentlichungstag der Anmeldung: **25.03.1998**
(21) Anmeldenummer: 97114627.9
(22) Anmeldetag: 22.08.1997
(51) Int. Cl.: H04B 7/26

(54) **Verfahren zur Informationsübertragung für ein mit TDMA (Time Division Multiple Access, Zeitmultiplex) arbeitendes, digitales Mobilfunksystem und System zur Anwendung des Verfahrens**

(30) Priorität: 19.09.1996 DE 19638436
(71) Anmelder: SIEMENS AKTIENGESELLSCHAFT, 80333 München (DE)
(72) Erfinder: Ritter, Gerhard, 86943 Thaining (DE)

(57) **Zusammenfassung**

Die Rahmenstruktur von nach Art des GSM-Standards aufgebauten Mobilfunksystemen erlaubt eine Aufteilung eines "Full-rate Channel" in zwei "unidirektionale Full-rate Channels", die jeweils einen unidirektionalen Kanal (traffic data downlink/uplink) für die Datenübertragung besitzen. Für die Signalisierung stehen für jeden unidirektionalen Kanal zwei Signalisierungskanäle (slow control data downlinK/uplink) zur Verfügung und zwar für jede Übertragungsrichtung jeweils einer. Dieses Verfahren läßt sich z.B. bei einer FAX-Übertragung über GSM-Mobilfunksysteme einsetzen.

## Beschreibung

Die Erfindung bezieht sich auf ein Verfahren gemäß dem Oberbegriff des Patentanspruchs 1.

Außerdem betrifft die Erfindung ein Mobilfunksystem zur Anwendung dieses Verfahrens.

Als mit TDMA (Time Division Multiple Access, Zeitmultiplex) arbeitendes, digitales Mobilfunksystem ist insbesondere das so bezeichnete GSM (Global System for Mobile Communication)-Mobilfunksystem bekannt geworden (P. Smolka: "GSM-Funkschnittstelle, Elemente und Funktionen" in "telekom praxis" 4/93, S. 17 bis 24). Mit dem GSM-Standard läßt sich neben den Telefondiensten, die eine Aufwärts-Verbindung (uplink) von einer Mobilfunkstation zur Basisstation und eine Abwärts-Verbindung (downlink) von der Basisstation zur Mobilfunkstation umfassen, auch eine unidirektionale Verbindung, also beispielsweise die einseitig gerichtete Übertragung von Daten oder eine Telefax-Übertragung realisieren. In diesem Zusammenhang ist aber darauf hinzuweisen, daß derartige Mobilfunksysteme in erster Linie für das Telefonieren ausgelegt worden sind. Dies wird besonders an der Konzeption der Luftschnittstelle für den GSM-Standard deutlich.

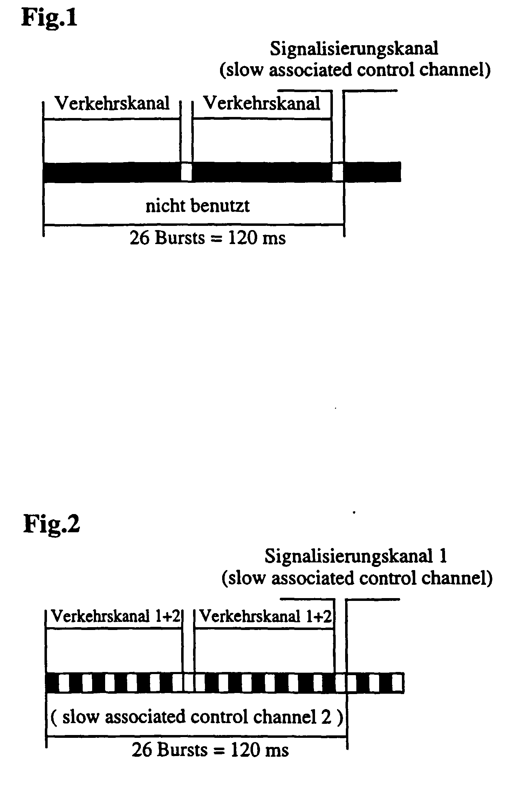

Bekanntlich sind nach dem GSM-Standard Übertragungen mit Vollrate ("Full-rate) und Halbrate ("Half-rate") vorgesehen. Wie in diesem Zusammenhang die die Struktur für Vollraten-Kanal(Full-rate Channel)-Betrieb darstellende Fig. 1 zeigt, werden innerhalb eines 120 msec langen Multirahmens mit 26 TDMA-Rahmen, die jeweils acht Zeitschlitze mit Burst enthalten, für einen Vollraten-Verkehrskanal (TCH/F, Full-rate Traffic Channel) 24 Bursts und für einen Signalisierungskanal (SACCH, Slow Associated Control Channel) ein Burst verwendet. Ein Burst wird überhaupt nicht benutzt. Bei Halbratenübertragung ("Half-rate Channel") werden, wie strukturmäßig in der Fig. 2 dargestellt ist, für einen Halbraten-Verkehrskanal 1 bzw. 2 (TCH/H, Half-rate Traffic Channel) 12 Bursts in 120 msec und jeweils ein Burst für den zugehörigen Signalisierungskanal 1 bzw. 2 (SACCH, Slow Associated Control Channel) verwendet. Zwei derartige Halbraten-Kanäle ("Half-rate Channels") belegen in 120 msec damit exakt die möglichen 26 Bursts. Die beschriebene Rahmenstruktur erlaubt somit eine Aufteilung eines Vollratenkanals ("Full-rate Channel") in zwei Halbratenkanäle ("Half-rate Channels").

Der Erfindung liegt die Aufgabe zugrunde, bei mit TDMA (Time Division Multiple Access, Zeitmultiplex) arbeitenden, digitalen Mobilfunksystemen, die eine mit der Rahmenstruktur des GSM-Standards vergleichbare Rahmenstruktur aufweisen, eine unidirektionale Informationsübertragung, wie sie z.B. bei der einseitig gerichteten Datenübertragung oder der FAX-Übertragung vorliegt, ohne aufwendige Abänderungen und unter Einhaltung des Rahmenstandards zu erreichen.

Entsprechend der Erfindung wird bei einem gattungsgemäßen Verfahren zur Informationsübertragung diese Aufgabe durch die im kennzeichnenden Teil des Patentanspruchs 1 angegebenen Merkmale gelöst. Die im Oberbegriff des Anspruchs 1 angegebene und vorstehend für das GSM-Mobilfunksystem beispielhaft und detailliert beschriebene Rahmenstruktur erlaubt, wie durch die Erfindung erkannt wurde, die Aufteilung eines Vollraten-Kanals ("Full-rate Channel") in zwei unidirektionale Vollraten-Kanäle, welche jeweils einen unidirektionalen Kanal für die Informationsübertragung besitzen. Für die Signalisierung stehen dabei für jeden unidirektionalen Kanal zwei Signalisierungskanäle, für jede Übertragungsrichtungen jeweils einer zur Verfügung.

In vorteilhafter Weise lassen sich diese beiden Signalisierungskanäle für die Steuerung von Rückmeldungen ("handshaking") in einem ARQ (Automatic Request)-Verfahren, d.h. einem gesicherten Übertragungsverfahren, bei dem der Empfänger für als fehlerhaft erkannte Zeichen automatisch eine Wiederholung anfordert, verwenden. Bevorzugt wird man aus Gründen eines erhöhten Datendurchsatzes dazu selektive ARQ-Verfahren einsetzen.

Vorteilhafte Anwendungsmöglichkeiten des Verfahrens nach der Erfindung sind in den Ansprüchen 6 und 7 angegeben.

Ein für die FAX-Übertragung ausgelegtes Mobilfunksystem unter Anwendung des Verfahrens nach der Erfindung ist im Anspruch 8 angegeben.

Im folgenden werden das Verfahren nach der Erfindung und das vorstehend erwähnte, für eine FAX-Übertragung ausgelegte Mobilfunksystem im einzelnen anhand von Figuren beschrieben.
Es zeigen:
- Fig. 1: die bereits beschriebene GSM-Rahmenstruktur für Vollraten-Verkehrskanäle ("Full-rate Traffic Channel"),
- Fig. 2: die ebenfalls bereits erläuterte GSM-Rahmenstruktur für zwei Halbraten-Verkehrskanäle ("Half-rate Traffic Channels"),
- Fig. 3: die Übertragungsstruktur eines Vollraten-Kanals ("Full-rate Channel") bei GSM,
- Fig. 4a: die Übertragungsstruktur eines unidirektionalen Kanals für die Abwärtsverbindung ("Downlink") gemäß dem Verfahren nach der Erfindung,
- Fig. 4b: die Übertragungsstruktur eines unidirektionalen Kanals für die Aufwärtsverbindung ("Uplink") gemäß dem Verfahren nach der Erfindung, und
- Fig. 5: das Blockschaltbild eines Mobilfunksystems nach GSM-Art zur FAX-Übertragung unter Anwendung des Verfahrens nach der Erfindung.

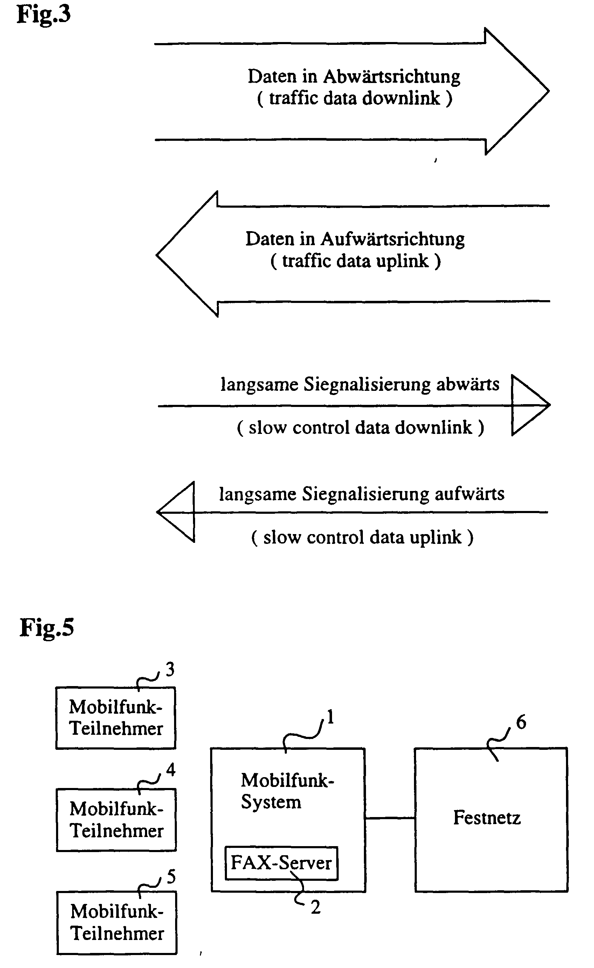

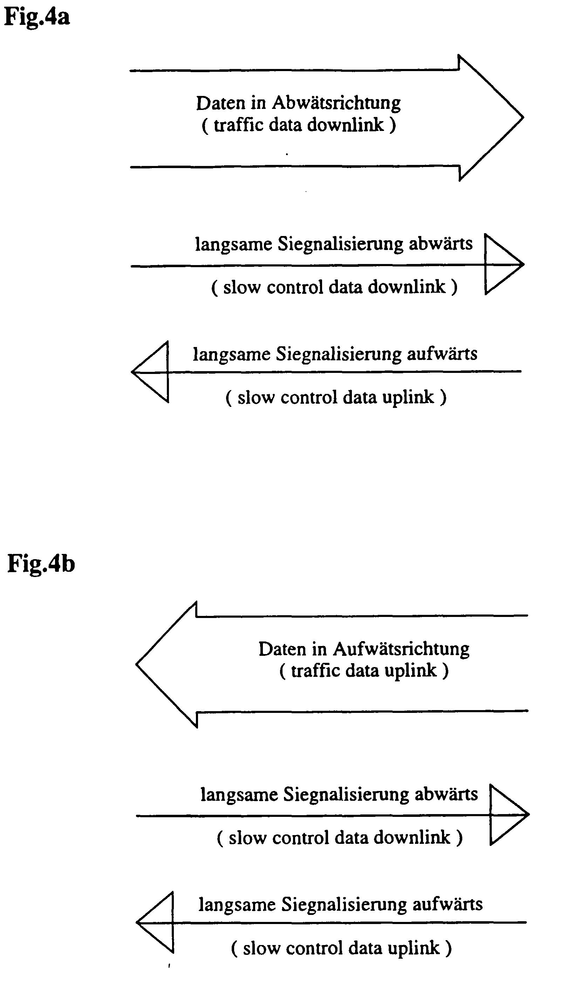

Fig. 3 zeigt die Übertragungsstruktur eines Vollraten-Kanals ("Full-rate Channel") bei GSM mit gleichzeitiger Übertragung von Daten in Aufwärts- und in Abwärtsrichtung (Traffic Data Uplink und Traffic Data Downlink) einschließlich langsamer Signalisierung abwärts (slow control data downlink) bzw. aufwärts (slow control data uplink).
Aus der Figur 4 (a und b) geht hervor, daß sich ein "Full-rate Channel", wie er in Fig. 3 dargestellt ist, in zwei "unidirektionale Full-rate Channels" aufteilen läßt, die jeweils einen unidirektionalen Kanal für die Informationsübertragung besitzen, nämlich abwärts den "traffic data downlink" (Fig. 4a) und aufwärts den "traffic data uplink" (Fig. 4b). Für die Signalisierung stehen für jeden unidirektionalen Kanal "traffic data downlink" (Fig. 4a) bzw. "traffic data uplink" (Fig. 4b) zwei Signalisierungskanäle, für jede Übertragungsrichtung jeweils einer, zur Verfügung, nämlich abwärts der Signalisierungskanal "slow control data downlink" bzw. aufwärts der Signalisierungskanal "slow control data uplink".

Eine attraktive Verwendung der durch die Erfindung eröffneten Möglichkeiten stellen Datenübertragungen und insbesondere die Telefax (FAX)-Übertragung dar. Eine FAX-Übertragung ist prinzipiell eine einseitig gerichtete Datenübertragung. Ein ein- oder mehrseitiges Dokument läßt sich als ein codierter Datenblock betrachten, der möglichst fehlerfrei von einem Absender zu einem Empfänger übertragen werden soll. Ein Rückkanal wird prinzipiell nur zur Quittierung des fehlerfreien Empfangs bzw. für Wiederholungsanforderungen von fehlerhaft empfangenen Abschnitten des jeweils als FAX übertragenen Dokuments benötigt. Damit ist ein unidirektionaler Übertragungskanal mit bidirektionaler Signalisierung, welcher sich in einem Mobilfunksystem nach Art des GSM-Systems gemäß der Erfindung in einfacher Weise realisieren läßt, völlig ausreichend.

Ein Problem bei derzeitigen Realisierungen von FAX-Übertragungen über Mobilfunksysteme stellt die zusätzliche Verzögerungszeit im Mobilfunksystem dar, die zu Zeitproblemen in den eigentlich für reine Festnetzanwendungen vorgesehenen Protokollen führen kann. Eine vorteilhafte Anwendung des Verfahrens nach der Erfindung besteht deshalb in der Ausstattung eines Mobilfunksystems mit einem FAX-Server bzw. Universal-Server. Ein solches Mobilfunksystem mit Umfeld ist in Blockschaltbildform in Fig. 5 dargestellt. Im Mobilfunksystem 1 übernimmt ein FAX-Server 2 die unidirektionale Übertragung der Dokumente von bzw. zu den Mobilfunkteilnehmern 3, 4 und 5 und die Übertragung zu bzw. von den Teilnehmern in einem Festnetz 6. Von seiten des Festnetzes 6 nimmt der FAX-Server 2 die FAXe, welche von den Teilnehmern im Festnetz 6 für Mobilfunkteilnehmer 3, 4, 5 versandt werden, entgegen und überträgt sie unidirektional zu den Mobilfunkteilnehmern 3, 4, 5. Für FAXe, die von Mobilfunkteilnehmern 3, 4, 5 ausgehen, übernimmt der FAX-Server 2 die unidirektional übertragenen Datenblöcke und überträgt sie entsprechend den Festnetzprotokollen zu den jeweiligen Teilnehmern im Festnetz. Bei einer solchen Art von FAX-Übertragung ist die Datenrate in der Luftschnittstelle entkoppelt von der Datenrate, welche im Festnetz verwendet wird, was andernfalls ebenfalls zu unnötigen Belegungen der üblicherweise knappen Mobilfunkkanäle führen kann.

Der Vorteil der anhand Fig. 5 beschriebenen Übertragung besteht darin, daß zunächst mögliche Zeitprobleme der Protokolle vermieden werden, darüber hinaus die Belegung von Mobilfunkkanälen reduziert wird und insbesondere auf einem Vollraten-Kanal ("Full-rate Channel") gleichzeitig zwei FAX-Übertragungen abgewickelt werden können. Der zuletzt erwähnte Gewinn ist von der Gesamtzahl der Kanäle der Basisstationen und dem FAX-Aufkommen abhängig. Insgesamt wird eine erheblich bessere Ausnutzung der stets begrenzten Mobilfunk-Ressourcen erreicht.

Die vorstehend erläuterte FAX-Übertragung ist nur ein Beispiel für paketweise Datenübertragungen. Bei einer Reihe von anderen Datenübertragungen, die ebenfalls paketweise erfolgen, läßt sich das gleiche Prinzip wie bei der erläuterten FAX-Übertragung anwenden.

## Patentansprüche

1. Verfahren zur Informationsübertragung für ein mit TDMA (Time Division Multiplex Access = Zeitmultiplex) arbeitendes, digitales Mobilfunksystem, das eine Funkschnittstelle aufweist, die hinsichtlich ihres Aufbaus und insbesondere ihrer Rahmenstruktur derjenigen des GSM(Global System for Mobile Communication)-Standards entspricht oder ähnelt, wobei jeweils eine festgelegte geradzahlige Anzahl von Zeitschlitze (Bursts) enthaltenden TDMA-Rahmen einen Multirahmen von bestimmter Dauer bildet, der bei Vollratenübertragung neben den für Vollraten-Verkehrskanäle (Full-rate Traffic Channel, TCH/F) verwendeten TDMA-Rahmen noch zwei TDMA-Rahmen und zumindest einen davon für Signalisierungskanäle vorsieht, **dadurch gekennzeichnet,** daß zur unidirektionalen Informationsübertragung die Rahmenstruktur so ausgebildet wird, daß ein Vollraten-Verkehrskanal in zwei unidirektionale Vollraten-Verkehrskanäle aufgeteilt wird, welche jeweils einen unidirektionalen Kanal (traffic data downlink, traffic data uplink) für die Informationsübertragung besitzen, und daß für die Signalisierung für jeden unidirektionalen Kanal zwei Signalisierungskanäle (slow control data downlink, slow control data uplink) und zwar für jede Übertragungsrichtung jeweils einer zur Verfügung gestellt werden.

2. Verfahren nach Anspruch 1, **gekennzeichnet durch** die Verwendung beim GSM-Mobilfunksystem, bei dem 26 jeweils acht Zeitschlitze (Bursts) enthaltende TDMA-Rahmen einen Multirahmen von 120 msec Dauer bilden, wobei bei Vollratenübertragung 24 Bursts für einen Vollraten-Verkehrskanal, ein Burst für einen Signalisierungskanal sowie ein unbenutzter Burst vorgesehen sind und bei Halbratenübertragung jeder der beiden Halbraten-Verkehrskanäle 12 Bursts und jeweils einen Burst für den Signalisierungskanal aufweist.

3. Verfahren nach Anspruch 1 oder 2, **dadurch gekennzeichnet,** daß die beiden Signalisierungskanäle für Steuerungsaufgaben eingesetzt werden.

4. Verfahren nach Anspruch 3, **dadurch gekennzeichnet,** daß die beiden Signalisierungskanäle zur Steuerung von Rückmeldungen ("handshaking") in einem ARQ (Automatic Request)-Verfahren, d.h. einem gesicherten Übertragungsverfahren, bei dem der Empfänger für als fehlerhaft erkannte Zeichen automatisch eine Wiederholung anfordert, verwendet werden.

5. Verfahren nach Anspruch 4, **gekennzeichnet durch** den Einsatz eines selektiven ARQ-Verfahrens.

6. Verfahren nach einem der vorhergehenden Ansprüche, **gekennzeichnet durch** die Verwendung zur insbesondere paketweisen Übertragung von Daten.

7. Verfahren nach Anspruch 6, **gekennzeichnet durch** die Verwendung zur Telefax (FAX)-Übertragung, welche prinzipiell eine einseitig gerichtete Datenübertragung darstellt, wobei ein ein- oder mehrseitiges Dokument als ein codierter Datenblock zu betrachten ist, der möglichst fehlerfrei von einem Absender zu einem Empfänger zu übertragen ist, und wobei ein Rückkanal prinzipiell nur zur Quittierung des fehlerfreien Empfangs bzw. für Wiederholungsanforderungen von fehlerhaft empfangenen Abschnitten des Datenblocks benötigt wird.

8. Mobilfunksystem zur Anwendung des Verfahren nach Anspruch 7 in Verbindung mit Festnetzteilnehmern, **gekennzeichnet durch** die Anwendung eines FAX-Servers (2) bzw. Universal-Servers, der die unidirektionale Übertragung der Daten von Dokumenten von bzw. zu den Mobilfunkteilnehmern (3, 4, 5) und die Übertragung zu bzw. von den Teilnehmern eines Festnetzes (6) übernimmt, wobei der FAX- bzw. Universal-Server (2) die von Festnetzteilnehmern für Mobilfunkstationen versandten FAXe von der Festnetzseite entgegennimmt und sie unidirektional zu den Mobilfunkstationen überträgt und für von Mobilfunkstationen ausgehende FAXe die unidirektional übertragenen Datenblöcke übernimmt und sie entsprechend den Festnetzprotokollen zu den Festnetzteilnehmern überträgt.
